# EUROPÄISCHE PATENTSCHRIFT

(11) **EP 3 390 187 B1**
(45) Veröffentlichungstag und Bekanntmachung des Hinweises auf die Patenterteilung: **10.04.2019**
(21) Anmeldenummer: 17704765.1
(22) Anmeldetag: 13.02.2017
(51) Int. Cl.: B60W 30/18, B60W 10/06, B60W 20/00, F02N 11/00, B60W 40/08, B60W 50/14, B60K 6/547

(54) **BETRIEBSVERFAHREN FÜR EIN FAHRZEUG UND ZUGEHÖRIGES FAHRZEUG**
OPERATING METHOD FOR A VEHICLE AND RELATED VEHICLE
PROCÉDÉ DE FONCTIONNEMENT POUR UN VÉHICULE ET VÉHICULE ASSOCIÉ

(30) Priorität: 18.02.2016 DE 102016001916
(43) Veröffentlichungstag der Anmeldung: 24.10.2018
(73) Patentinhaber: Audi AG, 85049 Ingolstadt (DE)
(72) Erfinder: JOLY, Matthieu, 57150 Creutzwald (FR); KRUSE, Alexander, 85051 Ingolstadt (DE)
(86) Internationale Anmeldenummer: PCT/EP2017/053154
(87) Internationale Veröffentlichungsnummer: WO 2017/140620

(56) Entgegenhaltungen:
- EP-A1- 2 397 385
- DE-A1-102008 064 018
- DE-A1-102012 217 207
- DE-A1-102013 213 471
- DE-U1-202013 008 390
- FR-A1- 3 017 355
- US-A1- 2002 074 173

## Beschreibung

Die Erfindung betrifft ein Betriebsverfahren für ein Fahrzeug, das einen mit einem Handschaltgetriebe über eine Kupplung gekoppelten Verbrennungsmotor sowie eine Start-Stopp-Einrichtung mit einer Abschaltautomatik umfasst, die den Verbrennungsmotor ausschaltet, wenn festgelegte Stopp-Bedingungen erfüllt sind, wobei eine der Stopp-Bedingungen vorsieht, dass sich das Handschaltgetriebe in einer Neutralstellung befindet.

Ein derartiges Betriebsverfahren ist beispielsweise aus der Druckschrift DE 10 2004 024 212 A1 bekannt.

Zur Verringerung des Kraftstoffverbrauchs wird es angestrebt, den Verbrennungsmotor eines Kraftfahrzeugs in Betriebszuständen mit geringem Wirkungsgrad, insbesondere im Leerlaufbetrieb, möglichst selten zu betreiben. Dazu dient die Start-Stopp-Automatik, die eine Abschaltautomatik umfasst, die beim Vorliegen der festgelegten Stopp-Bedingungen eine automatische Abschaltung des Verbrennungsmotors bewirkt. Ferner ist eine Anschaltautomatik vorgesehen, die beim Vorliegen von Start-Bedingungen einen automatischen Start des Verbrennungsmotors bewirkt. Bei dem aus der DE 10 2004 024 212 A1 bekannten Verfahren wird der Verbrennungsmotor während Betriebssituationen mit höheren Fahrzeuggeschwindigkeiten d. h. wenn die Fahrzeuggeschwindigkeit größer als 0 km/h ist, durch die Abschaltautomatik abgestellt. Eine Stopp-Bedingung ist dann erfüllt, wenn sich das Handschaltgetriebe in Neutralstellung befindet. Dazu ist es somit erforderlich, dass der Fahrer den Gang herausnimmt, d. h. den Neutralgang einlegt. Eine weitere Stopp-Bedingung ist, dass die Kupplung geschlossen ist, d. h., dass das Kupplungspedal nicht betätigt ist. Wenn der Fahrer hingegen das Handschaltgetriebe nicht in die Neutralstellung schaltet oder wenn die Kupplung betätigt ist, ist ein Abschalten des Verbrennungsmotors durch die Abschaltautomatik nicht möglich.

Die Druckschrift DE 10 2011 077 656 A1 offenbart ein Fahrzeug mit einer Start-Stopp-Einrichtung, die bei Unterschreiten einer niedrigen Geschwindigkeitsschwelle, die beispielsweise 5 km/h betragen kann, den Verbrennungsmotor abschaltet, sofern weitere Stopp-Bedingungen erfüllt sind. Bei einem Handschaltgetriebe muss sich dazu der Gangwahlhebel in einer Leerlaufposition befinden, die Kupplung darf nicht betätigt sein und es darf momentan keine Lastanforderung vorhanden sein. Bei dem dort beschriebenen Verfahren wird die Zeitdauer geschätzt, währenddessen keine Antriebsleistung des Verbrennungsmotors benötigt wird, in Abhängigkeit dieser geschätzten Zeitdauer wird eine Entscheidung über das Abschalten des Verbrennungsmotors getroffen, wenn sich das Fahrzeug einer Verkehrsampel nähert.

Aus der DE 10 2008 064 018 A1 ist ein Betriebsverfahren für ein Kraftfahrzeug bekannt, bei dem ein Verbrennungsmotor ausgeschaltet werden kann, wenn eine Entfernung zu einem Haltepunkt unterschritten wird. Weitere Kriterien für den Ausschaltvorgang sind beispielsweise das Überschreiten oder das Unterschreiten einer Bremsmomentschwelle, einer Geschwindigkeitsschwelle, einer Beschleunigkeitsschwelle oder eines Schwellenwerts eines Bremsdrucks.

Bei herkömmlichen Fahrzeugen kann die Abschaltautomatik den Verbrennungsmotor nur dann ausschalten, wenn sich das Handschaltgetriebe in einer Neutralstellung befindet. Wenn der Benutzer mit dieser Funktion nicht vertraut ist, kann das Fahrzeug nicht verbrauchsoptimal betrieben werden.

Die Druckschrift DE 20 2013 008 390 U1 offenbart eine Start-Stopp-Automatik, die eine Abschaltautomatik umfasst, gemäß dem Oberbegriff des Anspruchs 1.

Der Erfindung liegt daher die Aufgabe zugrunde, ein Betriebsverfahren anzugeben, das eine verbrauchsoptimale Nutzung des Fahrzeugs ermöglicht.

Zur Lösung dieser Aufgabe ist bei einem Betriebsverfahren der eingangs genannten Art erfindungsgemäß vorgesehen, dass eine optische und/oder akustische und/oder haptische Empfehlung zum Schalten des Handschaltgetriebes in die Neutralstellung ausgegeben wird, wenn die Geschwindigkeit des Hybridfahrzeugs größer als 0 km/h ist.

Bei herkömmlichen Fahrzeugen wird eine derartige Schaltempfehlung, die auch als Neutralgangempfehlung bezeichnet wird, lediglich im Stillstand ausgegeben. Wenn der Fahrer erst im Stillstand die Neutralstellung des Handschaltgetriebes wählt, erhöht sich die Einschaltdauer des Verbrennungsmotors und somit der Kraftstoffverbrauch. Wenn dem Fahrer andererseits durch das erfindungsgemäße Betriebsverfahren frühzeitig signalisiert wird, dass das Handschaltgetriebe in die Neutralstellung geschaltet werden soll, kann die Abschaltautomatik den Verbrennungsmotor anschließend abschalten, sofern alle Stopp-Bedingungen erfüllt sind, so dass die gewünschte Einsparung von Kraftstoff eintritt. Die Erfindung ermöglicht somit eine frühzeitige Ausgabe der Neutralgangempfehlung an den Fahrer, wodurch ein Ausschaltvorgang auch bei einem sich noch bewegenden Fahrzeug, vorzugsweise während eines Bremsmanövers, erfolgen kann.

Das erfindungsgemäße Betriebsverfahren eignet sich besonders gut für ein als Hybridfahrzeug ausgebildetes Fahrzeug, das einen als Riemenstartergenerator (RSG) betreibbaren Elektromotor aufweist. Ein derartiger Riemenstartergenerator wird in einem ersten Betriebszustand als Starter (Anlasser) des Verbrennungsmotors und in einem zweiten Betriebszustand als Generator eingesetzt. Ein derartiger Riemenstartergenerator kann während eines Bremsvorgangs Energie in die Fahrzeugbatterie einspeisen. Der in dieser Anmeldung verwendete Begriff Hybridfahrzeug bezieht sich auf ein Kraftfahrzeug, bei dem zwei unterschiedliche Antriebseinheiten vorhanden sind, nämlich ein Verbrennungsmotor und wenigstens ein Elektromotor.

Die Neutralgangempfehlung kann beispielsweise optisch in einem Kombiinstrument und/oder auf einem Display angezeigt werden. Alternativ kann die Neutralgangempfehlung optisch durch eine Signalleuchte, eine LED oder ein anderes Beleuchtungselement ausgegeben werden. Eine akustische Empfehlung kann durch ein akustisches Signal oder eine Sprachausgabe ausgegeben werden. Eine haptische Empfehlung kann durch eine Vibration des Lenkrads oder gegebenenfalls des Schaltknaufs erfolgen. Die verschiedenen Möglichkeiten, um die Neutralgangempfehlung auszugeben, können auch miteinander kombiniert werden.

Bei dem erfindungsgemäßen Betriebsverfahren wird vorgesehen dass der Zeitpunkt der Ausgabe der Schaltempfehlung in Abhängigkeit wenigstens einer Fahrzustandsgröße und einer Umfeldinformation ausgegeben wird. Bei dem erfindungsgemäßen Betriebsverfahren ist der Zeitpunkt der Ausgabe der Schaltempfehlung abhängig von einer Fahrsituation. Beispielsweise gibt es Fahrsituationen, bei denen sich das Fahrzeug lediglich mit geringer Geschwindigkeit bewegt, beispielsweise beim Einparken oder Ausparken oder beim Rangieren. In dieser Betriebssituation ist es nicht zweckmäßig, den Verbrennungsmotor mittels der Abschaltautomatik auszuschalten. Dasselbe gilt, wenn das Fahrzeug beispielsweise im Stadtverkehr hinter einem vorausfahrenden Fahrzeug fährt, das häufig bremst oder beschleunigt. In diesem Betriebszustand ist die Ausgabe einer Neutralgangempfehlung meistens nicht zweckmäßig, da die Dauer der Abschaltung gering ist, so dass keine oder keine hinreichende Kraftstoffersparnis erzielt werden kann.

Das erfindungsgemäße Verfahren sieht vor, dass eine weitere Stopp-Bedingung vorsieht, dass die Geschwindigkeit des Fahrzeugs einen Schwellwert erreicht oder unterschreitet, wobei die Schaltempfehlung bereits ausgegeben wird, wenn die aktuelle Geschwindigkeit des Fahrzeugs größer als der Schwellwert ist. Die Schaltempfehlung kann beispielsweise ausgegeben werden, wenn die aktuelle Geschwindigkeit 5 km/h über dem Schwellwert oder 10 km/h über dem Schwellwert liegt. Da in diesem Betriebszustand zumeist ein Bremsvorgang durchgeführt wird ist es zweckmäßig, die Neutralgangempfehlung bei einer Geschwindigkeit, die größer als der Schwellwert für das Ausschalten des Verbrennungsmotors ist, auszugeben.

In diesem Zusammenhang kann es bei dem erfindungsgemäßen Verfahren vorgesehen sein, dass eine Geschwindigkeit des Fahrzeugs von 25 km/h, vorzugsweise 15 km/h, als Schwellwert für die Abschaltautomatik festgelegt ist. Für ein Fahrzeug mit Handschaltgetriebe wird dabei eine Geschwindigkeit von 25 km/h bevorzugt.

Erfindungsgemäß wird vorgesehen, dass eine erfasste Reaktionszeit des Fahrers als Fahrzustandsgröße berücksichtigt wird. Wenn die Reaktionszeit des Fahrers beispielsweise zwei Sekunden beträgt, kann die Neutralgangempfehlung zwei Sekunden vor Erreichen der Erreichen des Schwellwerts für die Geschwindigkeit ausgegeben werden. Die Reaktionszeit kann ein festgelegter Parameter sein, der beispielsweise zwei oder drei Sekunden beträgt, alternativ kann die Reaktionszeit auch individuell für einen Fahrer anhand von in der Vergangenheit durchgeführten und erfassten Eingaben festgelegt werden.

Das erfindungsgemäße Verfahren sieht vor, dass in dem Fall, wenn ein vorausfahrendes Fahrzeug als Umfeldinformation erfasst wird, der Schwellwert für die Geschwindigkeit des Fahrzeugs, bei der die Abschaltautomatik den Verbrennungsmotor ausschaltet, auf einen niedrigeren Wert abgesenkt wird. Das Absenken auf einen niedrigeren Wert ist sinnvoll, um zu verhindern, dass im Stadtverkehr oder Kolonnenverkehr häufige Neutralgangempfehlungen ausgegeben werden, die jedoch nur zu einer kurzen Ausschaltdauer führen. In diesem Zusammenhang kann es bei dem erfindungsgemäßen Betriebsverfahren vorgesehen sein, dass der Schwellwert beispielsweise auf näherungsweise 7 km/h abgesenkt wird. In diesen Fällen kann zumindest bei der niedrigen Geschwindigkeit von 7 km/h die Neutralgangempfehlung ausgegeben werden, so dass der Verbrennungsmotor noch vor dem Stillstand abgeschaltet werden kann.

Gemäß einer Weiterbildung des erfindungsgemäßen Betriebsverfahrens kann es vorgesehen sein, dass als Fahrzustandsgröße die Verzögerung des Fahrzeugs berücksichtigt und die Schaltempfehlung nur ausgegeben wird, wenn die Verzögerung zwischen einem unteren Verzögerungsgrenzwert und einem oberen Verzögerungsgrenzwert liegt. Somit wird bei dem erfindungsgemäßen Verfahren eine Schaltempfehlung nur dann ausgegeben, wenn sich die aktuelle Verzögerung des Fahrzeugs innerhalb einer festgelegten Bandbreite befindet. Der untere Verzögerungsgrenzwert kann so festgelegt sein, dass bei geringen Verzögerungen, die beispielsweise beim Einparken oder Ausparken oder Rangieren vorhanden sind, keine Neutralgangempfehlung ausgegeben wird. Der obere Verzögerungsgrenzwert ist so festgelegt, dass bei sehr hohen Verzögerungen, die beispielsweise bei einer Notbremsung auftreten, ebenfalls keine Neutralgangempfehlung ausgegeben wird.

Bei dem erfindungsgemäßen Betriebsverfahren kann es vorgesehen sein, dass eine weitere Stopp-Bedingung vorsieht, dass die Kupplung geschlossen ist. In diesem Zustand, d. h. bei nicht betätigter Kupplung, kann die Abschaltautomatik den Verbrennungsmotor ausschalten.

Es wird darauf hingewiesen, dass das erfindungsgemäße Betriebsverfahren sowohl für "herkömmliche" Fahrzeuge als auch für Hybridfahrzeuge geeignet ist, die neben dem Verbrennungsmotor einen Elektromotor aufweisen.

Daneben betrifft die Erfindung ein Fahrzeug, das einen mit einem Handschaltgetriebe über eine Kupplung gekoppelten Verbrennungsmotor sowie eine Start-Stopp-Einrichtung mit einer Abschaltautomatik umfasst, die den Verbrennungsmotor ausschaltet, wenn festgelegte Stopp-Bedingungen erfüllt sind, wobei eine der Stopp-Bedingungen vorsieht, dass sich das Handschaltgetriebe in einer Neutralstellung findet. Das erfindungsgemäße Fahrzeug ist zum Durchführen des beschriebenen Betriebsverfahrens ausgebildet.

Vorzugsweise ist das erfindungsgemäße Fahrzeug als Hybridfahrzeug ausgebildet und weist einen insbesondere als Riemenstartergenerator betreibbaren Elektromotor auf.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: ein erstes Ausführungsbeispiel eines erfindungsgemäßen Fahrzeugs;
- Fig. 2: ein zweites Ausführungsbeispiel eines erfindungsgemäßen Fahrzeugs; und
- Fig. 3: ein Flussdiagramm, das die wesentlichen Schritte des erfindungsgemäßen Betriebsverfahrens zeigt.

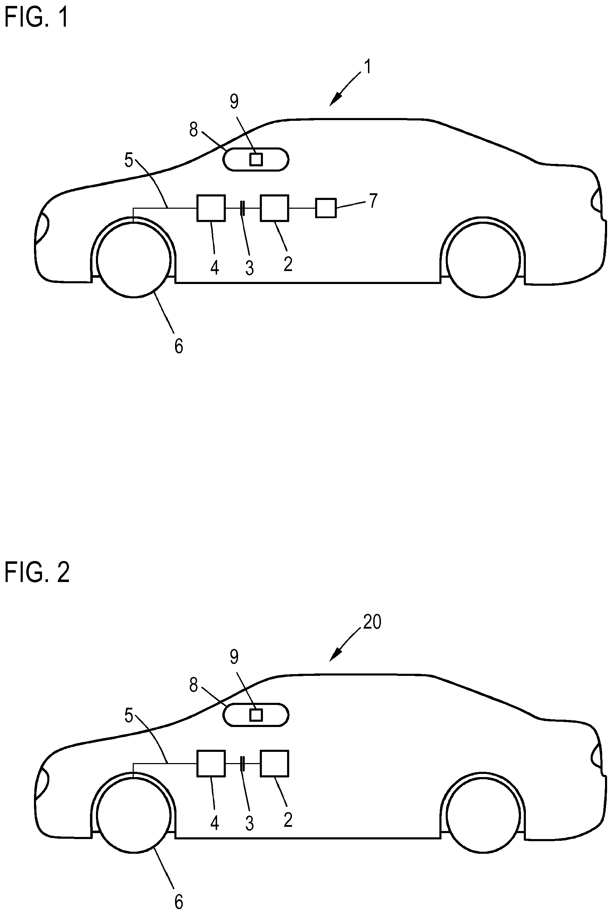

Fig. 1 zeigt ein als Hybridfahrzeug ausgebildetes Fahrzeug 1 mit einem Verbrennungsmotor 2, der über eine Kupplung 3 mit einem Handschaltgetriebe 4 gekoppelt ist. Eine Abtriebswelle 5 des Handschaltgetriebes 4 ist mit Rädern 6 einer Achse gekoppelt. Der Antriebsstrang umfasst ferner einen Elektromotor 7, der in diesem Ausführungsbeispiel als Riemenstartergenerator ausgebildet ist, d. h. er kann entweder zum Starten des Verbrennungsmotors 2 oder alternativ als Generator betrieben werden, um eine Batterie des Fahrzeugs 1 zu laden. Der Elektromotor 7 kann auch zum Beschleunigen des Verbrennungsmotors 2 eingesetzt werden. Das Fahrzeug 1 umfasst ein schematisch dargestelltes Kombiinstrument 8 mit einem Display 9, auf dem eine Neutralgangempfehlung optisch angezeigt werden kann.

Fig. 2 zeigt ein Fahrzeug 20, das abgesehen von dem fehlenden Elektromotor identisch zu dem Fahrzeug 1 ausgebildet ist. Das Fahrzeug 20 ist zur Durchführung des Betriebsverfahrens ausgebildet.

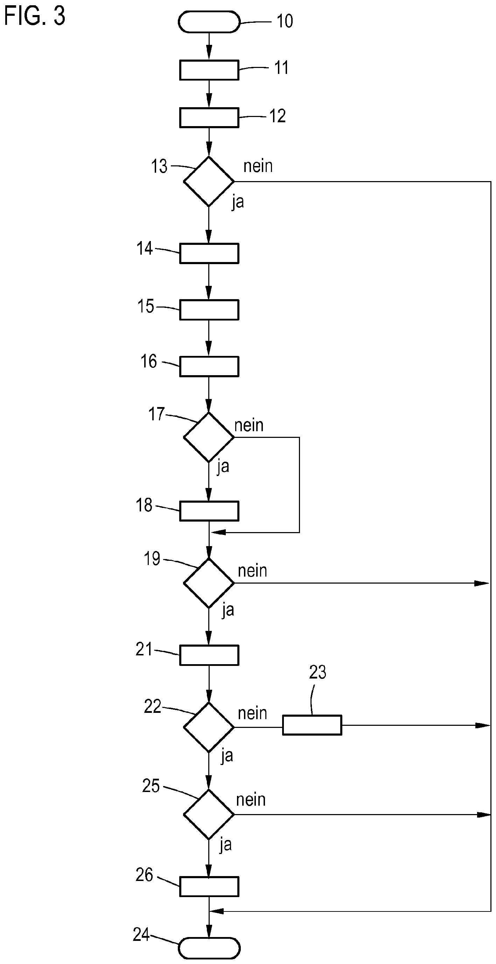

Fig. 3 ist ein Flussdiagramm, das die wesentlichen Schritte des Betriebsverfahrens für das Fahrzeug 1 zeigt.

Nach dem Start 10 des Verfahrens werden im Schritt 11 Fahrzustandsgrößen erfasst, die von anderen Steuergeräten über einen Datenbus bereitgestellt werden. Die Fahrzustandsgrößen umfassen beispielsweise die aktuelle Geschwindigkeit des Fahrzeugs 1, die aktuelle Beschleunigung oder Verzögerung und weitere, damit zusammenhängende Größen, beispielsweise die Informationen, ob eine Fahrzeugbremse betätigt ist.

Im Schritt 12 werden Umfeldinformationen erfasst, dies erfolgt durch wenigstens eine im Fahrzeug 1 vorgesehene Kamera. Die Kamera ist Bestandteil eines anderen Fahrzeugsystems, beispielsweise eines Fahrerinformationssystems oder eines Fahrerassistenzsystems, so dass aus den von der Kamera erfassten Bildaufnahmen des Fahrzeugumfelds Informationen abgeleitet werden können. In diesem Ausführungsbeispiel ist die Information relevant, ob sich vor dem Fahrzeug 1 (Egofahrzeug) ein anderes Fahrzeug befindet. Zusätzlich können der Abstand zu dem vorderen Fahrzeug, dessen Geschwindigkeit und Geschwindigkeitsänderung bestimmt werden.

Im Schritt 13 wird geprüft, ob die Geschwindigkeit des Fahrzeugs 1 größer 0 km/h ist. Sofern diese Bedingung nicht erfüllt ist, d. h. wenn das Fahrzeug 1 stillsteht, wird das Verfahren beendet. Anderenfalls, wenn die Geschwindigkeit größer als 0 km/h ist, wird die Geschwindigkeitsschwelle zum Ausgeben einer Neutralgangempfehlung im Schritt 14 auf einen bestimmten Wert gesetzt. In diesem Ausführungsbeispiel beträgt die Geschwindigkeitsschwelle 15 km/h, die zuvor festgelegt wurde. Bei anderen Ausführungsbeispielen kann die festgelegte Geschwindigkeitsschwelle selbstverständlich auch einen anderen Wert aufweisen. Dieser gespeicherte Schwellwert für die Geschwindigkeit, bei der die Neutralgangempfehlung ausgegeben wird, dient als Ausgangswert für die Berechnung einer variablen Geschwindigkeitsschwelle.

Im Schritt 15 wird die Geschwindigkeitsschwelle erhöht, wenn das Fahrzeug 1 momentan verzögert wird, beispielsweise wenn es ausrollt oder wenn der Fahrer ein Bremsmanöver durchführt. Im vorliegenden Ausführungsbeispiel wird die Geschwindigkeitsschwelle um 5 km/h erhöht.

Im nächsten Schritt 16 wird die Reaktionszeit des Fahrers berücksichtigt. Im vorliegenden Fall beträgt die Reaktionszeit zwei Sekunden, die Geschwindigkeitsschwelle wird somit um zwei Sekunden erhöht. Entweder kann - wie in diesem Ausführungsbeispiel - ein festgelegter Zeitraum, z. B. zwei Sekunden, berücksichtigt werden, alternativ kann auch die tatsächliche Reaktionszeit eines Fahrers anhand von in der Vergangenheit vorgenommenen Bedieneingaben erfasst werden.

Im Schritt 17 wird geprüft, ob ein vorausfahrendes Fahrzeug vorhanden ist. Dementsprechend werden dazu die im Schritt 12 erfassten Umfeldinformationen berücksichtigt. Wenn ein Fahrzeug vorhanden ist, wird in Schritt 18 die Geschwindigkeitsschwelle für das Ausgeben der Neutralgangempfehlung reduziert, in diesem Ausführungsbeispiel auf 7 km/h. Neben der Reduzierung auf einen absoluten Geschwindigkeitswert kann die Reduzierung auch derart erfolgen, dass die Geschwindigkeitsschwelle z. B. um 8 km/h abgesenkt wird. Sofern im Schritt 17 festgestellt wurde, dass kein vorausfahrendes Fahrzeug vorhanden ist, wird der Schritt 18 übersprungen.

Im Schritt 19 wird geprüft, ob die Verzögerung des Fahrzeugs 1 zwischen einem unteren Verzögerungsgrenzwert und einem oberen Verzögerungsgrenzwert liegt. Dementsprechend werden dazu die im Schritt 11 erfassten Fahrzustandsgrößen berücksichtigt. Auf diese Weise wird ausgeschlossen, dass sich das Fahrzeug 1 in einem Betriebszustand befindet, in dem eine Empfehlung zum Einlegen des Neutralgangs nicht gewünscht oder nicht sinnvoll ist. Falls die Verzögerung des Fahrzeugs 1 beispielsweise sehr gering ist, wird daraus geschlossen, dass der Fahrer ein Parkmanöver oder ein Rangiermanöver durchführt, falls die Verzögerung sehr hoch ist, wird daraus geschlossen, dass er eine Notbremsung vornimmt, auch in diesem Betriebszustand ist die Ausgabe einer Neutralgangempfehlung nicht sinnvoll. Wenn einer dieser Fälle vorliegt, wird das Verfahren im Schritt 24 beendet. Im Schritt 21 sind alle Voraussetzungen zum Ausgeben der Neutralgangempfehlung vorhanden und beim Erreichen der entsprechenden variablen Geschwindigkeitsschwelle wird im Schritt 21 die Neutralgangempfehlung auf dem Display 9 des Kombiinstruments 8 des in Fig. 1 gezeigten Fahrzeugs ausgegeben. Gegebenenfalls kann diese optische Information durch eine akustische und/oder eine haptische Informationsausgabe unterstützt werden.

Nachfolgend wird im Schritt 22 geprüft, ob sich das Handschaltgetriebe in Neutralstellung befindet. Sofern dies nicht der Fall ist, wird eine Warteschleife 23 durchlaufen, währenddessen in regelmäßigen kurzen Abständen geprüft wird, ob der Fahrer mittlerweile den Neutralgang eingelegt hat. Sofern des nach Ablauf einer festgelegten Zeitdauer nicht der Fall ist, wird das Verfahren im Schritt 24 beendet. Anderenfalls, d. h. wenn sich das Handschalgetriebe in Neutralstellung befindet, wird im Schritt 25 geprüft, ob die Kupplung geschlossen ist. Wenn die Kupplung hingegen offen ist, d. h. wenn der Fahrer die Kupplung betätigt, schaltet die Abschaltautomatik den Verbrennungsmotor nicht ab, daher wird das Verfahren dann beendet. Anderenfalls, d. h. wenn die Kupplung geschlossen ist, wird der Verbrennungsmotor 2 im Schritt 26 durch die Abschaltautomatik ausgeschaltet, wodurch das Verfahren im Schritt 24 beendet wird.

## Patentansprüche

1. Betriebsverfahren für ein Fahrzeug (1, 20), das einen mit einem Handschaltgetriebe (4) über eine Kupplung (3) gekoppelten Verbrennungsmotor (2) sowie eine Start-Stopp-Einrichtung mit einer Abschaltautomatik umfasst, die den Verbrennungsmotor (2) ausschaltet, wenn festgelegte Stopp-Bedingungen erfüllt sind, wobei eine der Stopp-Bedingungen vorsieht, dass sich das Handschaltgetriebe (4) in einer Neutralstellung befindet, wobei eine optische und/oder akustische und/oder haptische Empfehlung zum Schalten des Handschaltgetriebes (4) in die Neutralstellung ausgegeben wird, wenn die Geschwindigkeit des Fahrzeugs (1, 20) größer als 0 km/h ist, wobei der Zeitpunkt der Ausgabe der Schaltempfehlung in Abhängigkeit wenigstens einer Umfeldinformation und in Abhängigkeit wenigstens einer Fahrzustandsgröße ausgegeben wird,
**dadurch gekennzeichnet,**
**dass** eine weitere Stopp-Bedingung vorsieht, dass die Geschwindigkeit des Fahrzeugs (1, 20) einen Schwellwert erreicht oder unterschreitet, wobei die Schaltempfehlung bereits ausgegeben wird, wenn die aktuelle Geschwindigkeit des Fahrzeugs (1) größer als der Schwellwert ist, wobei in dem Fall, wenn ein vorausfahrendes Fahrzeug als Umfeldinformation erfasst wird, der Schwellwert für die Geschwindigkeit des Fahrzeugs (1, 20), bei der die Abschaltautomatik den Verbrennungsmotor (2) ausschaltet, auf einen niedrigeren Wert abgesenkt wird, wobei eine erfasste Reaktionszeit eines Fahrers als Fahrzustandsgröße berücksichtigt wird.

2. Betriebsverfahren nach Anspruch 1,
**dadurch gekennzeichnet,**
**dass** eine Geschwindigkeit des Fahrzeugs (1, 20) von 25 km/h, vorzugsweise 15 km/h, als Schwellwert für die Abschaltautomatik festgelegt wird.

3. Betriebsverfahren nach Anspruch 1 oder 2,
**dadurch gekennzeichnet,**
**dass** der Schwellwert auf näherungsweise 7 km/h abgesenkt wird.

4. Betriebsverfahren nach einem der vorangehenden Ansprüche,
**dadurch gekennzeichnet,**
**dass** als Fahrzustandsgröße die Verzögerung des Fahrzeugs (1, 20) berücksichtigt und die Schaltempfehlung nur ausgegeben wird, wenn die Verzögerung zwischen einem unteren Verzögerungsgrenzwert und einem oberen Verzögerungsgrenzwert liegt.

5. Betriebsverfahren nach einem der vorangehenden Ansprüche,
**dadurch gekennzeichnet,**
**dass** eine weitere Stopp-Bedingung vorsieht, dass die Kupplung (3) geschlossen ist.

6. Betriebsverfahren nach einem der vorangehenden Ansprüche,
**dadurch gekennzeichnet,**
**dass** die Schaltempfehlung optisch in einem Kombiinstrument (8) ausgegeben wird.

7. Fahrzeug (1, 20), das einen mit einem Handschaltgetriebe (4) über eine Kupplung (3) gekoppelten Verbrennungsmotor (2) sowie eine Start-Stopp-Einrichtung mit einer Abschaltautomatik umfasst, die den Verbrennungsmotor (2) ausschaltet, wenn festgelegte Stopp-Bedingungen erfüllt sind, wobei eine der Stopp-Bedingungen vorsieht, dass sich das Handschaltgetriebe (4) in einer Neutralstellung befindet,
**dadurch gekennzeichnet**
**dass** das Fahrzeug (1) zum Durchführen eines Betriebsverfahrens nach einem der Ansprüche 1 bis 6 ausgebildet ist.

8. Fahrzeug nach Anspruch 7,
**dadurch gekennzeichnet,**
**dass** es als Hybridfahrzeug ausgebildet ist und einen insbesondere als Riemenstartergenerator betreibbaren Elektromotor (7) aufweist.

## Claims

1. Operating method for a vehicle (1, 20), which comprises an internal combustion engine (2) coupled to a manual transmission (4) by means of a clutch (3) and comprises a start-stop device having an automatic switch-off function, which switches off the internal combustion engine (2) when defined stop conditions are met, wherein one of the stop conditions provides that the manual transmission (4) is in a neutral position, wherein an optical and/or acoustic and/or haptic suggestion to shift the manual transmission (4) into the neutral position is output if the speed of the vehicle (1, 20) is greater than 0 km/h, wherein the time of the output of the shift suggestion is output depending on at least one item of environment information and depending on at least one driving state variable,
**characterised in**
**that** a further stop condition provides that the speed of the vehicle (1, 20) reaches or falls below a threshold value, wherein the shift suggestion is output already when the current speed of the vehicle (1) is greater than the threshold value, wherein in the event that a vehicle travelling in front is detected as environment information, the threshold value for the speed of the vehicle (1, 20) at which the automatic switch-off function switches off the internal combustion engine (2) is reduced to a lower value, wherein a detected response time of a driver is taken into account as driving state variable.

2. Operating method according to claim 1,
**characterised in**
**that** a speed of the vehicle (1, 20) of 25 km/h, preferably 15 km/h, is defined as threshold value for the automatic switch-off function.

3. Operating method according to claim 1 or 2,
**characterised in**
**that** the threshold value is reduced to approximately 7 km/h.

4. Operating method according to any one of the preceding claims,
**characterised in**
**that** the deceleration of the vehicle (1, 20) is taken into account as driving state variable and the shift suggestion is output only when the deceleration is between a lower deceleration limit and an upper deceleration limit.

5. Operating method according to any one of the preceding claims,
**characterised in**
**that** a further stop condition provides that the clutch (3) is closed.

6. Operating method according to any one of the preceding claims,
**characterised in**
**that** the shift suggestion is output optically in an instrument cluster (8).

7. Vehicle (1, 20), which comprises an internal combustion engine (2) coupled to a manual transmission (4) by means of a clutch (3) and comprises a start-stop device having an automatic switch-off function, which switches off the internal combustion engine (2) when defined stop conditions are met, wherein one of the stop conditions provides that the manual transmission (4) is in a neutral position,
**characterised in**
**that** the vehicle (1) is designed to perform an operating method according to any one of claims 1 to 6.

8. Vehicle according to claim 7,
**characterised in**
**that** it is designed as hybrid vehicle and has an electric motor (7) that can be operated in particular as belt-driven starter-generator.

## Revendications

1. Procédé de fonctionnement pour un véhicule (1, 20) qui comprend un moteur à combustion interne (2) couplé à une boîte de vitesses manuelle (4) par un embrayage (3) ainsi qu'un dispositif d'arrêt et de redémarrage avec un arrêt automatique qui met hors service le moteur à combustion interne (2) lorsque des conditions d'arrêt fixées sont remplies, dans lequel une des conditions d'arrêt prévoit que la boîte de vitesses manuelle (4) se trouve dans une position neutre, dans lequel une recommandation optique et/ou acoustique et/ou haptique est émise pour la commutation de la boîte de vitesses manuelle (4) dans la position neutre, lorsque la vitesse du véhicule (1, 20) est supérieure à 0 km/h, dans lequel le moment de l'émission de la recommandation de commutation est émis en fonction d'une information environnementale et en fonction d'au moins une grandeur d'état de marche,
**caractérisé en ce**
**qu'**une autre condition d'arrêt prévoit que la vitesse du véhicule (1, 20) atteigne ou n'atteigne pas une valeur seuil, dans lequel la recommandation de commutation est déjà émise lorsque la vitesse actuelle du véhicule (1) est supérieure à la valeur seuil, dans lequel au cas où un véhicule précédant est détecté comme information environnementale, la valeur seuil pour la vitesse du véhicule (1, 20) pour laquelle l'arrêt automatique met hors service le moteur à combustion interne (2), est abaissée à une valeur plus faible, dans lequel un temps de réaction détecté d'un conducteur est pris en considération en tant que grandeur d'état de marche.

2. Procédé de fonctionnement selon la revendication 1,
**caractérisé en ce**
**qu'**une vitesse du véhicule (1, 20) de 25 km/h, de préférence de 15 km/h, est fixée en tant que valeur seuil pour l'arrêt automatique.

3. Procédé de fonctionnement selon la revendication 1 ou 2,
**caractérisé en ce**
**que** la valeur seuil est abaissée à approximativement 7 km/h.

4. Procédé de fonctionnement selon l'une quelconque des revendications précédentes,
**caractérisé en ce**
**qu'**en tant que grandeur d'état de marche le ralentissement du véhicule (1, 20) est pris en considération et la recommandation de commutation n'est émise que lorsque le ralentissement se trouve entre une valeur limite de ralentissement inférieure et une valeur limite de ralentissement supérieure.

5. Procédé de fonctionnement selon l'une quelconque des revendications précédentes,
**caractérisé en ce**
**qu'**une autre condition d'arrêt prévoit que l'embrayage (3) soit fermé.

6. Procédé de fonctionnement selon l'une quelconque des revendications précédentes,
**caractérisé en ce**
**que** la recommandation de commutation est émise par voie optique dans un instrument combiné (8).

7. Véhicule (1, 20) qui comprend un moteur à combustion interne (2) couplé à une boîte de vitesses manuelle (4) par le biais d'un embrayage (3) ainsi qu'un dispositif d'arrêt et de redémarrage avec un arrêt automatique qui éteint le moteur à combustion (2) lorsque des conditions d'arrêt fixées sont remplies, dans lequel une des conditions d'arrêt prévoit que la boîte de vitesses manuelle (4) se trouve dans une position neutre,
**caractérisé en ce**
**que** le véhicule (1) est réalisé pour la réalisation d'un procédé de fonctionnement selon l'une quelconque des revendications 1 à 6.

8. Véhicule selon la revendication 7,
**caractérisé en ce**
**qu'**il est réalisé en tant que véhicule hybride et présente un moteur électrique (7) pouvant être utilisé en particulier en tant que générateur de démarreur à courroie.
